**Europäisches Patentamt**

(19) **European Patent Office**

**Office européen des brevets**

(11) Numéro de publication: **0 049 191**
**B1**

(12) # FASCICULE DE BREVET EUROPEEN

(45) Date de publication du fascicule du brevet:
09.05.84

(51) Int. Cl.³: **C 09 K 7/02, E 21 B 33/138**

(21) Numéro de dépôt: **81401450.2**

(22) Date de dépôt: **18.09.81**

(54) Procédé de préparation de fluides de complétion et pâtes destinées à la mise en oeuvre de ce procédé.

(30) Priorité: **26.09.80 FR 8020664**

(43) Date de publication de la demande:
**07.04.82 Bulletin 82/14**

(45) Mention de la délivrance du brevet:
**09.05.84 Bulletin 84/19**

(84) Etats contractants désignés:
**AT BE DE FR GB IT NL SE**

(56) Documents cités:
**GB - A - 2 000 799**

(73) Titulaire: **Société ATOCHEM, 12-16, Allée des Vosges, F-92400 Courbevoie (FR)**

(72) Inventeur: **Demay, Claude, 5, rue Clément Ader, F-78160 Voisins le Bretonneux (FR)**
Inventeur: **Hermant, Marc Eugène, 10 ter, rue Lamartine, F-95240 Cormeilles en Parisis (FR)**
Inventeur: **Tilquin, Francois, 12, Avenue Audra, F-92700 Colombes (FR)**

(74) Mandataire: **Rochet, Michel et al, ATOCHEM Service PROPRIETE INDUSTRIELLE Tour Manhattan Cédex 21, F-92091 Paris la Défense (FR)**

## Description

La présente invention concerne un procédé de préparation de fluides à base aqueuse, destinés à servir de fluides de complétion, de reconditionnement d'un puits, de packer, de lestage, de forage ou de perforation et des pâtes destinées à la mise en œuvre de ce procédé.

Dans les travaux sur un puits pétrolier, par exemple, lors du forage, ou lors du conditionnement, il est nécessaire de contrôler efficacement le mouvement des fluides. En particulier, il est impératif de surmonter la pression du réservoir, et pour cela on injecte dans le puits un fluide de densité suffisante. Pour atteindre les densités recherchées, on utilise le plus souvent des solutions salines contenant ou non de fines particules en suspension. La densité de ces fluides peut alors être ajustée soit en faisant varier la concentration ou la nature des sels de la solution, soit en modifiant la quantité de particules en suspension. On peut ainsi utiliser des solutions aqueuses saturées de chlorures alcalins, de chlorure d'ammonium, de sulfate de sodium, de carbonate de sodium, de chlorure de calcium, de bromure de calcium, de chlorure de zinc, contenant en suspension des fines particules d'un sel soluble dans l'eau, mais insoluble dans les saumures, tel que le chlorure de sodium; des solutions aqueuses concentrées de sels, tels que le bromure de calcium, le chlorure de calcium, exemptes de particules solides, dont la densité est ajustée en jouant sur les concentrations.

Des agents conférant de la viscosité aux solutions salines sont décrits dans les brevets américains US-A 3 882 029, 3 892 275, 4 046 197, 4 083 407, 4 175 042 et le brevet français 2 364 957. Parmi ceux-ci on peut citer:

— Des gommes naturelles telles que la gomme arabique, la gomme adragante, la dextrine.

— Des polymères solubles dans l'eau tels que les polymères acryliques, les polymères vinyliques, les polyacrylamides.

— Des polysaccharides hydrosolubles.

Dans cette dernière famille, les principaux produits sont des dérivés de la cellulose qui contiennent au moins 1 groupe hydroxyalkyl par motif anhydroglucose. A titre d'exemple, et sans que cette liste puisse être limitative, nous citerons:

— Les hydroxyalkylcelluloses telles que les hydroxyéthylcelluloses et les hydroxypropylcelluloses.

— Les carboxyalkylhydroxyalkylcelluloses telles que les carboxyméthylhydroxyéthylcelluloses.

— Les alkylhydroxyalkylcelluloses telles que les méthylhydroxypropylcelluloses.

— Les hydroxyalkylalkylcelluloses telles que les hydroxyéthylméthylcelluloses, les hydroxypropylméthylcelluloses et les hydroxypropyléthylcelluloses.

Ces agents conférant de la viscosité sont utilisés à des concentrations variables, fonctions de la viscosité souhaitée. En général, ces concentrations sont comprises entre 0,1 et 10 g/l de solution saline.

La dissolution de ces additifs cellulosiques dans des solutions salines concentrées peut être suivie simplement par examen visuel, la dissolution complète de l'additif se traduisant par l'obtention d'une solution homogène. On peut aussi mesurer la viscosité apparente qui est la viscosité déterminée au viscosimètre FANN à 600 Tours/minute, divisée par 2. La mesure de cette viscosité apparente est décrite dans «Standard Procedure for Testing-Drilling Fluids, Section 2, Viscosity and Gel Strengh» A.P.I. RECOMMENDED PRACTICE, American Petroleum Institute A.P.I. RP 13 B, Avril 1969 – pages 5 et 6. Cette viscosité apparente croît avec la quantité d'additif cellulosique dissout.

Un inconvénient de ces additifs cellulosiques est que leur dissolution complète dans une solution aqueuse saline concentrée, c'est-à-dire dont la concentration en sels dépasse 10%, est extrêmement longue à obtenir et nécessite fréquemment une agitation vigoureuse pendant plusieurs dizaines d'heures.

Afin d'améliorer la solubilité dans l'eau des dérivés de la cellulose et en particulier des carboxyméthylcelluloses, l'utilisation de compositions de ces dérivés avec des éthers de glycol et de l'eau a été préconisée dans la demande de brevet GB 2 000 799. Cependant, selon les éthers de glycol et/ou la quantité d'eau utilisée et avec les alcools polyfonctionnels, ces compositions peuvent être instables et leur dissolution dans des solutions salines concentrées est toujours très difficile.

Or il a été trouvé, dans les services de la demanderesse, qu'il est possible de pallier cet inconvénient en utilisant, conjointement à l'agent cellulosique conférant la viscosité, un alcool polyfonctionnel ou un de ses monoéthers.

Les alcools polyfonctionnels utilisés sont:

— d'une part, les alcools dont le nombre d'atomes de carbone est compris entre 2 et 6, et dont le nombre de groupes hydroxyles est aussi compris entre 2 et 6, parmi lesquels on peut citer l'éthylène glycol, le propylène glycol, la glycérine, l'hexylène glycol, le néopentylglycol, le pentaérythritol, le sorbitol, le diéthylène glycol, le dipropylène glycol;

— d'autre part, les alcools contenant un atome d'azote, dont le nombre d'atomes de carbone est compris entre 2 et 9, et dont le nombre de groupes hydroxyles est compris entre 1 et 3, tels que les éthanolamines, les propanolamines, les isopropanolamines.

Ces alcools peuvent aussi être utilisés sous forme de l'un de leur monoéther dont le nombre de carbone de la chaîne alkyle du monoéther est compris entre 1 et 4, tels que le méthylglycol, l'éthylglycol, le propylglycol, le butylglycol, le méthoxy-1 propanol-2, le méthoxy-2 propanol-1.

Le rapport pondéral entre l'alcool polyfonctionnel, ou l'un de ses monoéthers, et l'agent conférant de la viscosité doit être supérieur à 1. Le rapport optimum varie bien entendu avec la nature de l'agent conférant de la viscosité, mais en général, de bons résultats sont obtenus lorsque ce rapport est compris entre 3 et 10.

L'agent conférant de la viscosité et l'alcool polyfonctionnel ou son monoéther doivent être préalablement mélangés avant leur mise en solution saline. Lorsque l'alcool polyfonctionnel est solide, comme par exemple dans le cas du pentaérythritol, on doit en outre utiliser une faible quantité d'eau, de manière à ce que le mélange obtenu se présente sous la forme d'une pâte homogène.

Les mélanges ainsi obtenus, peuvent être immédiatement utilisés, ou alors stockés pour une utilisation ultérieure.

Les exemples ci-après illustrent la présente invention.

Exemple 1

A une solution saline contenant 3 155 g de $CaBr_2$ de pureté supérieure à 84%, 1 037 g de $CaCl_2$ anhydre et 340 cc d'eau, de densité 1,78 et de viscosité apparente 26 mPa.s à 25°C, on ajoute 0,85% en poids d'une pâte homogène préparée au moment de l'emploi et composée de 12 parties pondérales d'hydroxyéthylcellulose (Cellosize QP 100 MH vendue par la société BP Chemicals) et 88 parties pondérales de monoéthylèneglycol. Après une heure d'agitation, à l'aide d'un agitateur magnétique, la viscosité apparente de la solution saline est de 80 mPa.s. à 25°C.

Laissé au repos plusieurs jours, le système reste homogène et la viscosité apparente reste égale à 80 mPa.s à 25°C.

Dans un essai comparatif, après huit heures d'agitation, à l'aide d'un agitateur magnétique, d'une solution saline de même composition que ci-dessus, de densité 1,78 et de viscosité apparente 26 mPa.s à 25°C et de 0,1% en poids d'hydroxyéthylcellulose (Cellosize QP 100 MH) on obtient un système dont la viscosité apparente n'a pas changé et qui au repos est hétérogène ce qui indique que l'hydroxyéthylcellulose ne s'est pratiquement pas dissoute dans la solution alcaline.

Exemple 2

A la solution saline, préparée selon l'exemple 1, de densité 1,78 et de viscosité apparente de 26 mPa.s à 25°C, on ajoute 0,85% en poids d'une pâte homogène, préparée plusieurs jours à l'avance, composée de 12 parties pondérales d'hydroxyéthylcellulose et de 88 parties pondérales de monoéthylèneglycol. Après environ 30 minutes d'agitation, à l'aide d'un agitateur magnétique de laboratoire, la viscosité apparente de la solution saline est de 83 mPa.s. à 25°C.

Laissé au repos plusieurs jours, le système est homogène et la viscosité est toujours de 83 mPa.s à 25°C.

Exemple 3

A la solution saline, préparée selon l'exemple 1, de densité 1,78 et de viscosité apparente de 26 mPa.s à 25°C, on ajoute 0,45% en poids d'une pâte homogène obtenue en mélangeant 1 partie pondérale d'hydroxyéthylcellulose (Cellosize QP 100 MH) et 3,5 parties pondérales de monoéthylèneglycol. Après 60 minutes d'agitation, avec un agitateur magnétique de laboratoire, la viscosité apparente de la solution est de 80 mPa.s à 25°C.

Laissé au repos plusieurs jours, le système est homogène et la viscosité est toujours de 80 mPa.s à 25°C.

Exemple 4

A la solution saline, préparée selon l'exemple 1, de densité 1,78 et de viscosité apparente de 26 mPa.s à 25°C, on ajoute 1,7% en poids de la pâte homogène préparée dans l'exemple 1. Après environ 90 minutes d'agitation, à l'aide d'un agitateur magnétique de laboratoire, la viscosité apparente de la solution saline est de 140 mPa.s. à 25°C. Après 120 minutes la viscosité apparente est de 160 mPa.s à 25°C.

Laissé au repos plusieurs jours, le système reste homogène et la viscosité ne change pas.

Exemple 5

A la solution saline, préparée selon l'exemple 1, de densité 1,78 et de viscosité apparente de 26 mPa.s à 25°C, on ajoute 0,42% en poids de la pâte homogène préparée dans l'exemple 2. Après environ 60 minutes d'agitation, à l'aide d'un agitateur magnétique de laboratoire, la viscosité apparente de la solution saline est de 55 mPa.s à 25°C.

Laissé au repos plusieurs jours, le système n'évolue pas.

Exemple 6

A la solution saline, préparée selon l'exemple 1, de densité 1,78 et de viscosité apparente de 26 mPa.s à 25°C, on ajoute 0,85% en poids d'une pâte homogène préparée à l'avance et composée de 12 parties pondérales d'hydroxyéthylcellulose (Cellosize QP 100 MH) et 88 parties pondérales de glycérine. Après 90 minutes d'agitation, à l'aide d'un agitateur magnétique de laboratoire, la viscosité apparente de la solution saline est de 65 mPa.s à 25°C.

Exemple 7

A la solution saline, préparée selon l'exemple 1, de densité 1,78 et de viscosité apparente de 26 mPa.s à 25°C, on ajoute 0,85% en poids d'une pâte homogène composée de 12 parties pondérales d'hydroxyéthylcellulose (Cellosize QP 100 MH) et 88 parties pondérales d'un mélange 50/50 pondéral de Sorbitol et d'eau. Après environ 90 minutes d'agitation, à l'aide d'un agitateur magnétique de laboratoire, la viscosité apparente de la solution saline est de 75 mPa.s à 25°C.

Exemple 8

A la solution saline, préparée selon l'exemple 1, de densité 1,78 et de viscosité apparente de 26 mPa.s à 25°C, on ajoute 0,85% en poids d'une pâte homogène composée de 12 parties pondérales d'hydroxyéthylcellulose (Cellosize QP 100 MH) et 88 parties pondérales de méthyl glycol. Après 90 minutes d'agitation, à l'aide d'un agitateur magnétique de laboratoire, la viscosité apparente de la solution saline est de 75 mPa.s à 25°C.

Exemple 9

Après dilution par de l'eau, de la solution saline préparée dans l'exemple 1, de manière à obtenir une densité de 1,60 à 25°C, on ajoute 1,7% en poids de la pâte préparée selon l'exemple 2. Après 60 minutes d'agitation, à l'aide d'un agitateur magnétique de laboratoire, la viscosité apparente de la solution saline est de 60 mPa.s à 25°C.

Exemple 10

A la solution saline, citée dans l'exemple 1, de densité 1,78 et de viscosité apparente de 26 mPa.s à 25°C, on ajoute 0,85% en poids d'une pâte homogène composée de 12 parties pondérales d'hydroxyéthylcellulose (Cellosize QP 100 MH) et 88 parties pondérales de triéthanolamine. Après 90 minutes d'agitation, à l'aide d'un agitateur magnétique de laboratoire, la viscosité apparente de la solution saline est de 35 mPa.s à 25°C.

Exemple 11

A la solution saline, citée dans l'exemple 1, de densité 1,78 et de viscosité apparente de 26 mPa.s à 25°C, on ajoute 0,85% en poids d'une pâte composée de 12 parties pondérales d'hydroxyéthylcarboxyméthylcellulose (Blanose HCT 18-2-90 vendue par Novacel) et 88 parties pondérales de monoéthylèneglycol. Après environ 60 minutes d'agitation, à l'aide d'un agitateur magnétique de laboratoire, la viscosité apparente de la solution est de l'ordre de 55 mPa.s à 25°C.

Exemple 12

A la solution saline, citée dans l'exemple 1, de densité 1,78 et de viscosité apparente de 26 mPa.s à 25°C, on ajoute 0,85% en poids d'une pâte composée de 12 parties pondérales d'hydroxyéthylcellulose (Natrosol 250 HHX vendue par Hercules) et 88 parties pondérales de monoéthylèneglycol. Après 120 minutes d'agitation, à l'aide d'un agitateur magnétique de laboratoire, la viscosité apparente de la solution est de 70 mPa.s à 25°C.

**Revendications**

1. Procédé de préparation de fluides à base aqueuse saline comprenant un dérivé de la cellulose ayant au moins un groupe hydroxyalkyl par motif anhydroglucose comme agent conférant de la viscosité, caractérisé en ce que l'on ajoute, à la solution aqueuse saline, une pâte homogène comprenant un dérivé de la cellulose et un alcool polyfonctionnel ou un de ses monoéthers, le rapport pondéral entre l'alcool polyfonctionnel ou un de ses monoéthers et le dérivé de la cellulose étant supérieur à 1.

2. Procédé selon la revendication 1, caractérisé en ce que le rapport pondéral entre l'alcool polyfonctionnel ou l'un de ses monoéthers et le dérivé de la cellulose est compris entre 3 et 10.

3. Procédé selon chacune des revendications 1 et 2, caractérisé en ce que l'alcool polyfonctionnel a un nombre d'atomes de carbone compris entre 2 et 6 et un nombre d'hydroxyles compris entre 2 et 6.

4. Procédé selon chacune des revendications 1 à 3, caractérisé en ce que l'alcool polyfonctionnel est l'éthylèneglycol, le propylèneglycol, la glycérine, l'hexylèneglycol, le néopentylglycol, le pentaérythritol, le sorbitol, le diéthylèneglycol, le dipropylèneglycol.

5. Procédé selon chacune des revendications 1 et 2, caractérisé en ce que l'alcool polyfonctionnel contient un atome d'azote et dont le nombre d'atomes de carbone est compris entre 2 et 9 et le nombre de groupes hydroxyles est compris entre 1 et 3.

6. Procédé selon chacune des revendications 1, 2 et 5, caractérisé en ce que l'alcool polyfonctionnel est une éthanolamine, une propanolamine ou une isopropanolamine.

7. Procédé selon chacune des revendications 1 et 2, caractérisé en ce que le monoéther de l'alcool polyfonctionnel a une chaîne alkyl contenant 1 à 4 atomes de carbone.

8. Procédé selon chacune des revendications 1, 2 et 7, caractérisé en ce que le monoéther de l'alcool polyfonctionnel est le méthylglycol, l'éthylglycol, le propylglycol, le butylglycol, le méthoxy-1 propanol-2 ou le méthoxy-2 propanol-1.

9. Procédé selon chacune des revendications 1 à 8, caractérisé en ce que la pâte homogène de dérivé de la cellulose et d'alcool polyfonctionnel contient de l'eau.

10. Pâtes homogènes destinées à la mise en œuvre du procédé selon chacune des revendications 1 à 9.

**Patentansprüche**

1. Verfahren zur Herstellung von Flüssigkeiten auf Basis einer wässrigen Salzlösung, die ein Cellulosederivat mit mindestens einer Hydroxyalkylgruppe pro Anhydroglukoseeinheit als Agens zur Erhöhung der Viskosität enthält, dadurch gekennzeichnet, dass man der wässrigen Salzlösung eine homogene Paste zugibt, die ein Cellulosederivat und einen polyfunktionellen Alkohol oder einen seiner Monoäther enthält, wobei das Gewichtsverhältnis zwischen polyfunktionellem Alkohol oder einem seiner Monoäther und dem Cellulosederivat oberhalb 1 liegt.

2. Verfahren nach Anspruch 1, dadurch gekennzeichnet, dass das Gewichtsverhältnis zwischen dem polyfunktionellen Alkohol oder einem seiner Monoäther und dem Cellulosederivat zwischen 3 und 10 liegt.

3. Verfahren nach einem der Ansprüche 1 und 2, dadurch gekennzeichnet, dass der polyfunktionelle Alkohol zwischen 2 und 6 Kohlenstoffatome und zwischen 2 und 6 Hydroxylgruppen enthält.

4. Verfahren nach einem der Ansprüche 1 bis 3, dadurch gekennzeichnet, dass es sich bei dem polyfunktionellen Alkohol um Ethylenglykol, Propylenglykol, Glycerin, Hexylenglykol, Neopentylglykol, Pentaerythrit, Sorbit, Diethylenglykol oder Dipropylenglykol handelt.

5. Verfahren nach einem der Ansprüche 1 und 2, dadurch gekennzeichnet, dass der polyfunktionelle Alkohol ein Stickstoffatom enthält, dass die Anzahl seiner Kohlenstoffatome zwischen 2 und 9 liegt und dass die Anzahl seiner Hydroxylgruppen zwischen 1 und 3 liegt.

6. Verfahren nach einem der Ansprüche 1, 2 und 5, dadurch gekennzeichnet, dass es sich bei dem polyfunktionellen Alkohol um ein Ethanolamin, ein Propanolamin oder ein Isopropanolamin handelt.

7. Verfahren nach einem der Ansprüche 1 und 2, dadurch gekennzeichnet, dass der Monoäther des polyfunktionellen Alkohols eine Alkylkette mit 1 bis 4 Kohlenstoffatomen aufweist.

8. Verfahren nach einem der Ansprüche 1, 2 und 7, dadurch gekennzeichnet, dass es sich bei dem Monoäther des polyfunktionellen Alkohols um Methylglykol, Ethylglykol, Propylglykol, Butylglykol, 1-Methoxy-2-propanol oder 2-Methoxy-1-propanol handelt.

9. Verfahren nach einem der Ansprüche 1 bis 8, dadurch gekennzeichnet, dass die homogene Paste aus dem Cellulosederivat und dem polyfunktionellen Alkohol Wasser enthält.

10. Homogene Pasten, die bestimmt sind für die Verwendung in dem Verfahren nach einem der Ansprüche 1 bis 9.


## Claims

1. Process for the preparation of fluids based on aqueous saline, comprising a derivative of cellulose, having at least one hydroxyalkyl group per anhydroglucose unit, as an agent which confers viscosity, characterised in that a homogeneous paste comprising a cellulose derivative and a polyfunctional alcohol or one of its monoethers, is added to the aqueous saline solution, the weight ratio between the polyfunctional alcohol or one of its monoethers and the cellulose derivative being greater than 1.

2. Process according to claim 1, characterised in that the weight ratio between the polyfunctional alcohol or one of its monoethers and the cellulose derivative is between 3 and 10.

3. Process according to each of claims 1 and 2, characterised in that the polyfunctional alcohol has a number of carbon atoms which is between 2 and 6 and a number of hydroxyl groups between 2 and 6.

4. Process according to each of claims 1 to 3, characterised in that the polyfunctional alcohol is ethylene glycol, propylene glycol, glycerine, hexylene glycol, neopentyl glycol, pentaerythritol, sorbitol, diethylene glycol, dipropylene glycol.

5. Process according to each of claims 1 and 2, characterised in that the polyfunctional alcohol contains a nitrogen atom and its number of carbon atoms is between 2 and 9 and the number of hydroxyl groups is between 1 and 3.

6. Process according to each of claims 1, 2 and 5, characterised in that the polyfunctional alcohol is an ethanolamine, a propanolamine or an isopropanolamine.

7. Process according to each of claims 1 and 2, characterised in that the monoether of the polyfunctional alcohol has an alkyl chain containing 1 to 4 carbon atoms.

8. Process according to each of claims 1, 2 and 7, characterised in that the monoether of the polyfunctional alcohol is methyl glycol, ethyl glycol, propyl glycol, butyl glycol, 1-methoxy-2-propanol or 2-methoxy-1-propanol.

9. Process according to each of claims 1 to 8, characterised in that the homogeneous paste of the cellulose derivative and the polyfunctional alcohol contains water.

10. Homogeneous pastes intended for use in the process according to each of claims 1 to 9.